# EUROPEAN PATENT SPECIFICATION

(11) **EP 4 522 892 B1**
(45) Date of publication and mention of the grant of the patent: **10.12.2025**
(21) Application number: 23727097.0
(22) Date of filing: 10.05.2023
(51) Int. Cl.: F16J 15/3236, F16J 15/16, B60T 11/236, B60T 11/232

(54) **PRIMARY GASKET FOR A CYLINDER ASSEMBLY, CYLINDER ASSEMBLY**
PRIMÄRDICHTUNG FÜR EINE ZYLINDEREINHEIT, ZYLINDEREINHEIT
JOINT D'ÉTANCHÉITÉ PRIMAIRE POUR ENSEMBLE CYLINDRE, ENSEMBLE CYLINDRE

(30) Priority: 13.05.2022 IT 202200009947
(43) Date of publication of application: 19.03.2025
(73) Proprietor: Brembo S.p.A., 24035 Curno (Bergamo) (IT)
(72) Inventor: CARRARA, Marco, 24035 Curno, Bergamo (IT); MAZZEI, Luca, 24035 Curno, Bergamo (IT); SALA, Paolo, 24035 Curno, Bergamo (IT)
(74) Representative: Crippa, Paolo Ernesto
(86) International application number: PCT/IB2023/054823
(87) International publication number: WO 2023/218367

(56) References cited:
- FR-A1- 2 944 761
- JP-A- 2013 071 507
- US-A- 4 781 024
- US-A1- 2006 064 978

## Description

### . Field of the invention

**.** The present invention relates to a primary gasket for a cylinder assembly, as well as to a cylinder assembly for a hydraulic and/or electrohydraulic system of a vehicle.

### . Background art

**.** In the field of cylinder assemblies for hydraulic and/or electrohydraulic systems in a vehicle, such as a brake master cylinders and/or brake actuators, it is known to arrange a sealingly movable float inside a hollow cylinder which defines an axial direction A-A, and a radial direction R-R perpendicular to the axial direction.

**.** The float is axially movable in the hollow cylinder between a resting configuration and at least one advanced configuration to pressurize a fluid, e.g., a brake fluid, in a pressure chamber in the hollow cylinder.

**.** When the float is in a resting configuration, the pressure chamber is in fluid communication with a fluid reservoir by means of a supply conduit. When the float is in a resting configuration, the pressure in the pressure chamber is equal to the pressure of the reservoir. When the float advances axially toward the at least one advanced configuration, the pressure chamber and the reservoir are fluidically isolated, allowing the fluid in the pressure chamber to be pressurized.

**.** The float is axially movable by sliding tightly on a primary gasket and a secondary gasket which are accommodated in respective housings or grooves, a primary housing and a secondary housing, made in the wall of the hollow cylinder. The primary housing and the secondary housing are made in the wall of the hollow cylinder. The supply conduit leads radially from the hollow cylinder wall into a supply opening arranged between the primary housing and the secondary housing.

**.** The secondary gasket is adapted to form a static and dynamic seal between the cylinder and the float to avoid the fluid in the reservoir and/or pressure chamber, when in fluid communication with the reservoir, from flowing into the cylinder in the opposite direction to the pressure chamber. For example, the secondary gasket serves the function of hydraulically isolating the electromechanical components accommodated in the cylinder on the side opposite to the pressure chamber, and/or preventing leakages of hydraulic fluid from the pressure chamber.

**.** The primary gasket is adapted to keep the fluid pressurized in the pressure chamber, preventing fluid passages from the pressure chamber to the reservoir when the float is in an advanced position in the cylinder. In this case, the primary gasket is in a fluid isolation configuration, with a back portion thereof abutting against a first radial wall of primary housing.

**.** If the hydraulic system needs a further pressure increase, at least one valve which increases the pressure in the reservoir is opened in order to trigger a flow of fluid from the reservoir to the pressure chamber, avoiding the primary gasket from preventing such a fluid passage, thus increasing the pressure in the pressure chamber.

**.** In order to fulfill this function, the primary gasket is a three-lip gasket comprising an inner lip, a central lip, and an outer lip which project from the back portion to be radially and mutually spaced apart. The inner lip is configured to form a seal with the float. The outer lip is configured to form a seal with an outer wall of the primary housing when the pressure in the pressure chamber is higher than the pressure in the reservoir, thus fluidically isolating the pressure chamber and the reservoir. The outer lip is configured to bend toward the central lip moving away from the outer wall of the housing when the pressure in the reservoir is higher than the pressure in the pressure chamber, thus allowing a fluid communication between the reservoir and the pressure chamber. When the reservoir pressure exceeds the pressure chamber pressure, the primary gasket is configured to slide axially in the primary housing from the fluid isolation configuration to a fluid communication configuration, thus axially abutting with the central lip against a second radial wall of primary housing axially opposite to said first radial wall. In some cases, the central lip is further configured to bend toward the inner lip, allowing the reservoir and the pressure chamber to be fluidically connected, thus allowing the pressure in the pressure chamber to be increased.

**.** Once the at least one valve is closed, the primary gasket is configured to slide axially to the fluid isolation configuration, abutting with the back portion against the first radial wall until it fluidically isolates the reservoir and the pressure chamber.

. It has been found in the industry that when the primary gasket is overstressed in the fluid communication configuration, the outer lip and the central lip can bend excessively leading to the rotation of the primary gasket in the primary housing, which can compromise the return of the primary gasket to the fluid isolation configuration, thus jeopardizing the proper operation of the cylinder assembly.

**.** Therefore, the need to stabilize the primary gasket when working in the fluid communication configuration is strongly felt in the industry, reducing the risk of unintended rotations of the primary gasket which can obstruct the passage of fluid from the reservoir to the pressure chamber and/or vice versa.

**.** Therefore, the need to avoid as much as possible a bending of the central lip which could lead to rotation of the primary gasket is strongly felt in the industry.

A prior art gasket is known from e.g. US 4,781,024 A.

### . Solution

**.** It is the object of the present invention to provide a primary gasket for a cylinder assembly which allows solving the complained problems of the prior art.

**.** This and other objects and advantages are achieved by a primary gasket according to claim **1** and cylinder assembly according to claim **12.**

**.** Some advantageous embodiments are the subject of the dependent claims.

**.** By virtue of the suggested solutions, a high fluid passage can be ensured through the central lip, reducing the resistance to fluid passage compared to the prior art.

**.** By virtue of the suggested solutions, a high fluid passage can be ensured, reducing the tendency of the central lip to bend.

**.** By virtue of the suggested solutions, a seamless abutment circumferentially intercalated with central lip discharges of the central lip against the radial wall of the primary gasket housing can be ensured, so as to ensure low resistance to the passage of fluid on the one hand, and high bending resistance or structural strength of the central lip on the other hand, keeping the central lip stably abutting.

### . Figures

**.** Further features and advantages of the primary gasket and the cylinder assembly will become apparent from the following description of preferred embodiments thereof, given by way of nonlimiting indication, with reference to the accompanying drawings, in which:

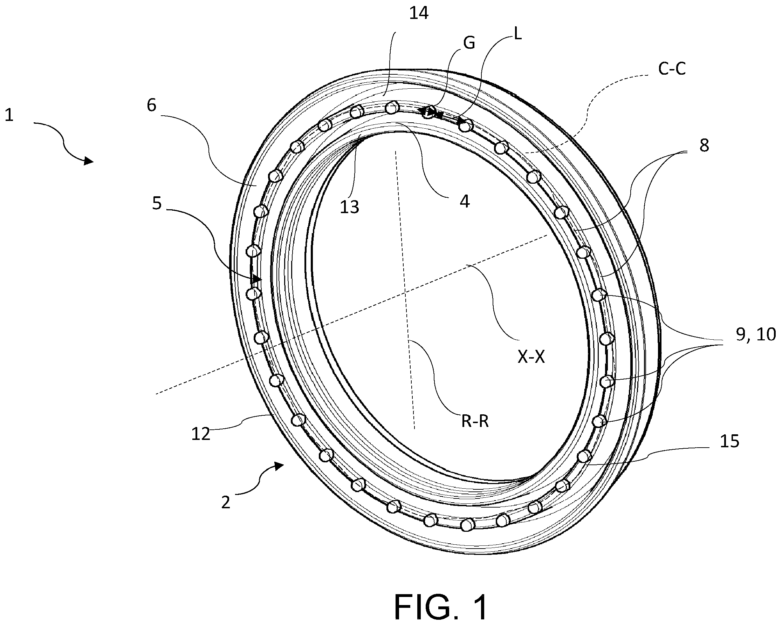

- figure 1 is an axonometric view of a primary gasket according to the present invention showing an annular gasket body having an inner lip, an outer lip, and a central lip projecting in an axial direction from a gasket back portion, where the central lip comprises a plurality of protuberances intercalated by a plurality of discharges;

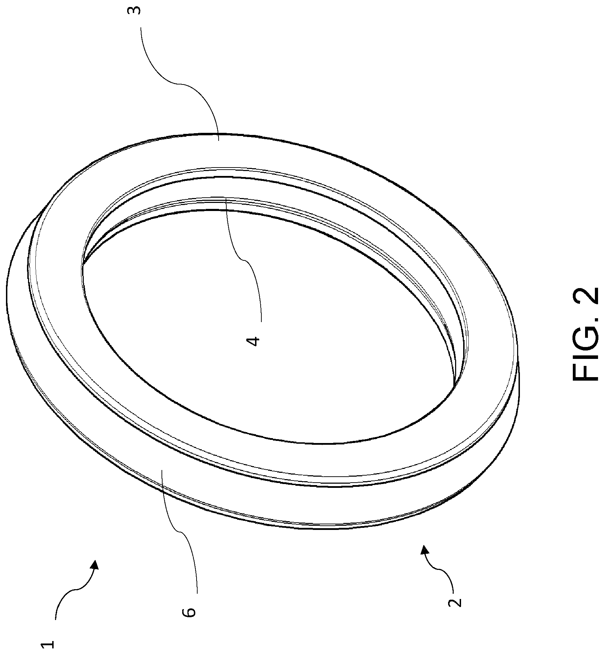

- figure 2 is an axonometric view of the primary gasket in figure 1 seen from an opposite direction, showing the back portion of the primary gasket;

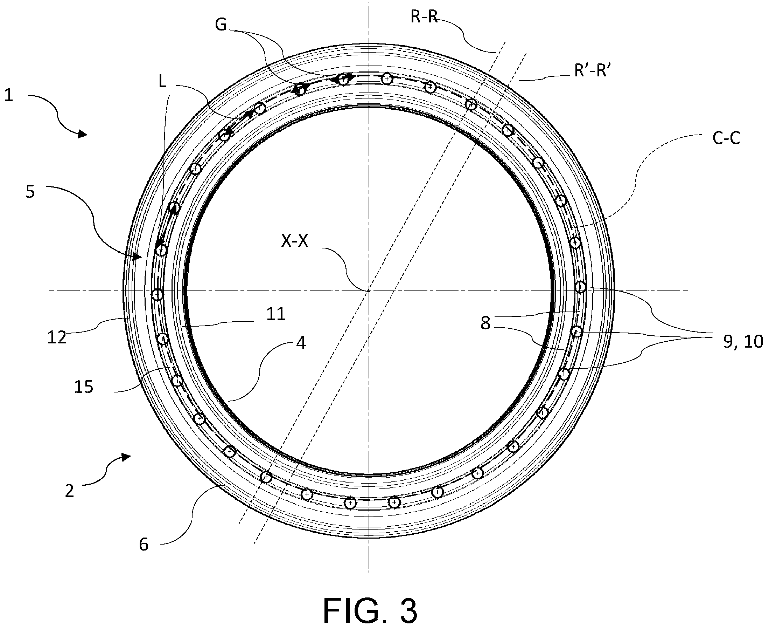

- figure 3 shows a front view of the primary gasket in figure 1;

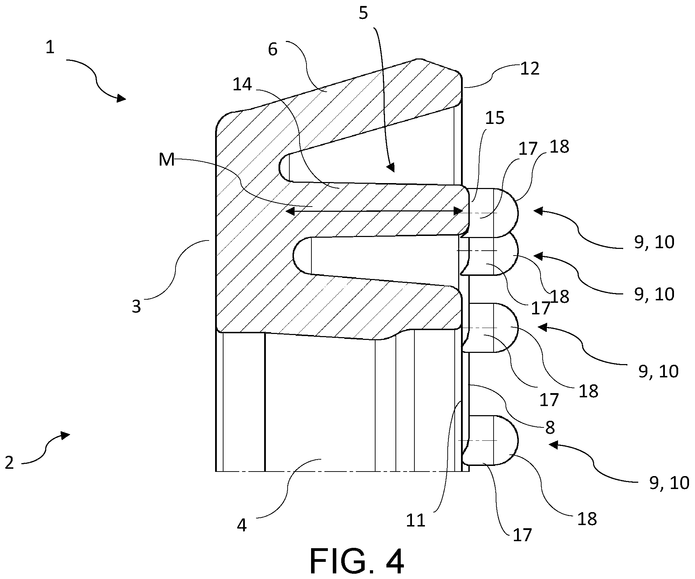

- figure 4 shows the gasket in figure 1 sectioned along a parallel plane and comprising the radial direction R'-R' in figure 3, in which the central lip is sectioned at a discharge of the plurality of discharges;

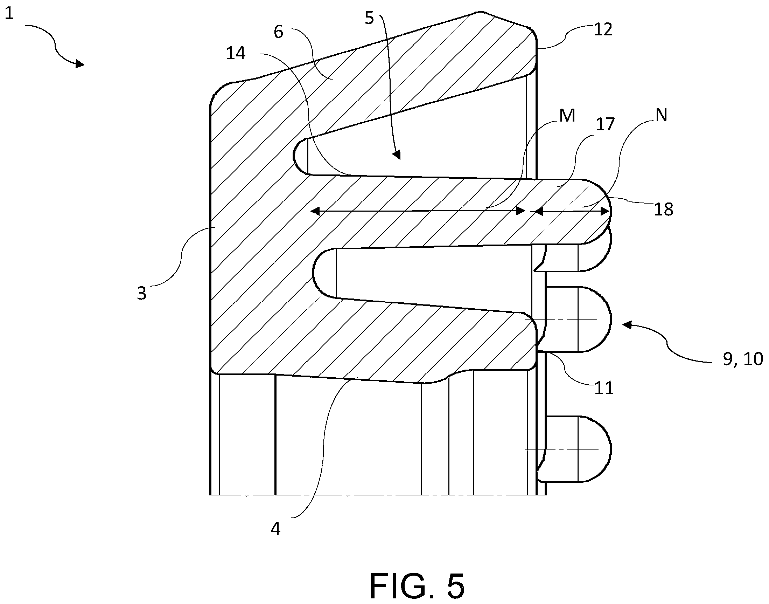

- figure 5 shows the gasket in figure 1 sectioned along a parallel plane and comprising the radial direction R-R shown in figure 3, in which the central lip is sectioned at a protuberance of the plurality of protuberances;

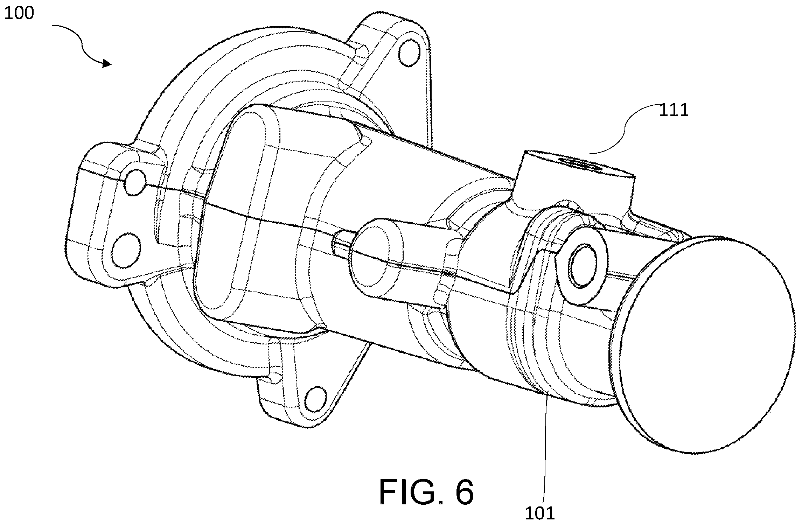

- figure 6 is an axonometric view of a cylinder assembly according to the present invention, e.g., a brake master cylinder actuatable by a lever to pressurize a fluid, or a linear actuator for BBW (Brake By Wire) systems governed by an electric motor to pressurize a brake fluid;

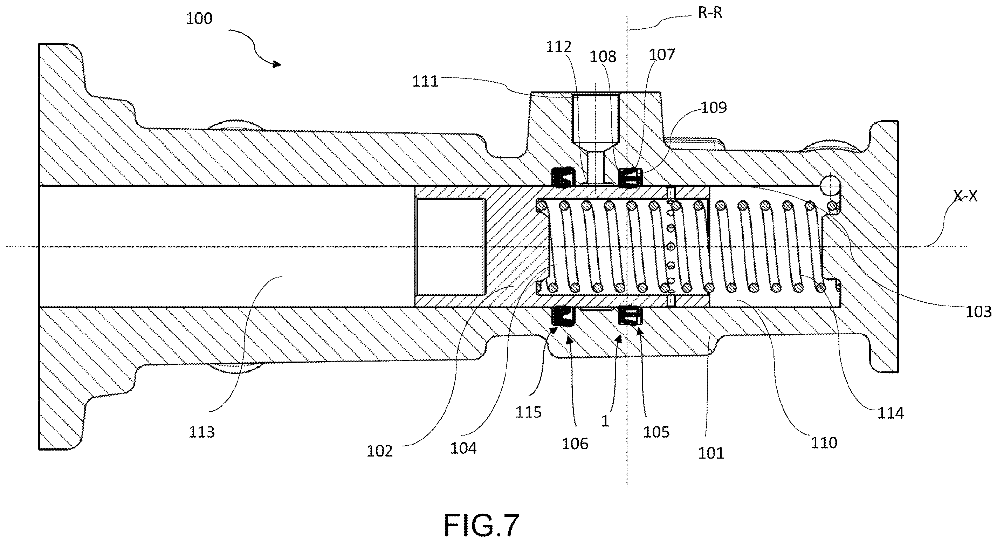

- figure 7 is a section view of the cylinder assembly in figure 6 sectioned along a section plane perpendicular to the axial direction X-X and the radial direction R-R, showing the float or piston slidingly accommodated in the float housing made in the sealed cylinder by virtue of the primary gasket in figure 1, and a secondary gasket.

### . Description of some preferred embodiments

**.** According to a general embodiment, a primary gasket for a cylinder assembly is indicated by reference numeral 1. Said cylinder assembly 100 comprises a cylinder 101 and a float 102 slidingly accommodated in a float housing 104 delimited by a cylinder wall 103 of said cylinder 101 for pressurizing a fluid. For example, said cylinder assembly 100 isa brake master cylinder or an electrically controlled actuator. According to an embodiment, said electrically controlled actuator is a linear actuator.

**.** The primary gasket 1 comprises an annular body 2, which extends circumferentially at least along a circumferential direction C-C about an axial direction X-X, where said primary gasket 1 defines a radial direction R-R perpendicular to said axial direction X-X and said circumferential direction C-C.

**.** Said annular body 2 is configured to be accommodated in a primary gasket housing 105 defined in said cylinder wall 103. The primary gasket housing 105 is delimited radially by an axial housing wall 107 and axially by a first radial housing wall 108 and a second radial housing wall 109, connected as an undercut to said axial housing wall 107.

**.** Said annular body 2 comprises an inner lip 4, a central lip 5, an outer lip 6, and a back portion 3.

**.** The back portion 3 comprises a back abutment surface 13 configured to abut against the first radial housing wall 108 of said primary gasket housing 105.

**.** The inner lip 4, the central lip 5, and the outer lip 6 extend from the back portion 3 in the axial direction X-X spaced from one another in the radial direction R-R from the opposite side of the back abutment surface 13.

**.** The inner lip 4 is configured to form a dynamic and static seal on the float 102.

**.** The outer lip 6 is configured to form a seal with said axial housing wall 107.

**.** The central lip 5 comprises an annular root 14, which extends axially between said back portion 3 and a root edge 15.

**.** The central lip 5 comprises a plurality of protuberances 10, 9, where each protuberance 10, 9 projects axially from said root edge 15.

**.** Said plurality of protuberances 10, 9 and said root edge 15 define a plurality of discharges 8.

**.** Each discharge 8 is delimited circumferentially by each protuberance 10 and a first neighboring protuberance 9 thereof of said plurality of protuberances 10, 9, and axially by a free edge portion of said root edge 15, which extends between each protuberance 10 and the first neighboring protuberance 9 thereof.

**.** Each protuberance 10, 9 extends circumferentially by a protuberance extension G.

**.** Each discharge 8 extends circumferentially by a discharge extension L.

**.** According to the invention, a sum of each discharge extension L is greater than a sum of each protuberance extension G.

**.** According to an embodiment, the sum of each discharge extension L and each protuberance extension G is equal to the circumferential extension of the root edge 15.

**.** According to an embodiment, the sum of each discharge extension L is at least two times greater than the sum of each protuberance extension G.

**.** According to an embodiment, the sum of each discharge extension L is at least three times greater than the sum of each protuberance extension G.

**.** According to an embodiment, said protuberances of said plurality of protuberances 10 are circumferentially equidistant from one another along said discharge extension L.

**.** According to an embodiment, each protuberance 10 and each first neighboring protuberance extend circumferentially with said protuberance extension G.

**.** According to an embodiment, said discharge extension L is equal to at least said protuberance extension G.

**.** According to an embodiment, said discharge extension L is equal to at least twice said protuberance extension G.

**.** According to an embodiment, said discharge extension L is between at least three times said protuberance extension G and at least five times said protuberance extension G.

**.** By virtue of the provision of the sum of discharge extensions being higher than the sum of the protuberance extensions, a high fluid passage is possible when the protuberances 9, 10 abut against the second radial housing wall.

**.** According to the invention, each protuberance 9, 10 comprises a protuberance body 17 projecting from said annular root 14 and a protuberance head 18 connected to said protuberance body 17. Said protuberance head is configured to abut against said second radial housing wall 109, avoiding said root edge 15 from abutting against said second radial housing wall 109 by allowing a passage of fluid through said plurality of discharges 8.

**.** According to an embodiment, said protuberance extension G is equal to the maximum circumferential dimension of the protuberance body 17 at the connection with the root edge 15.

**.** According to an embodiment, said discharge extension L is equal to the circumferential distance along said root edge 15 between two first neighboring protuberance bodies.

**.** According to an embodiment, said annular root 13 axially has a root extension M between said back portion 3 and said root edge 15.

**.** According to an embodiment, each protuberance 9, 10 axially has an axial protuberance extension N between said root edge 15 and a protuberance end.

**.** According to an embodiment, the axial root extension M is between two times the axial protuberance extension N and six times the axial protuberance extension N.

**.** By virtue of the provision of the annular root 14 and protuberances 9, 10 projecting from the root edge 15, said discharges 8 can be made as radial openings having a circumferential extension equal to the discharge extension and an axial extension equal to the axial protuberance extension N, where the radial openings are spaced apart from the back portion 3 by at least the axial root extension M, thus ensuring a high bending resistance for the central lip.

**.** According to an embodiment, said protuberance body 17 is cylindrical and/or prismatic in shape. According to an embodiment, each protuberance body 17 is cylindrical and/or prismatic in shape. According to an embodiment, said protuberance head 18 and/or each protuberance head 18 is tapered with respect to said protuberance body 17.

**.** According to an embodiment, said protuberance head 18 is made in one piece with said protuberance body 17.

**.** Not part of the invention, is that said protuberance head 18 and/or each protuberance head 18 is cylindrical in shape.

**.** According to the invention, said protuberance head 18 and/or each protuberance head 18 has a rounded shape in the opposite direction to said annular root. According to an embodiment, said protuberance head 18 has a hemispherical or spherical cap shape, so as to abut against a circular surface. According to an embodiment, said protuberance head 18 has an apex portion having a partial spherical cap shape connected to a connecting portion having a cone-shaped side wall which tapers from the protuberance body 17 to the apex portion.

**.** By virtue of the provision of said cylindrical protuberance body and/or said rounded protuberance head 18, it is possible to reduce the exposed surface area of the protuberance perpendicularly to the fluid passage direction, allowing a reduction in terms of fluid passage resistance.

**.** According to an embodiment, each discharge of said plurality of discharges 8 has a substantially U-shaped profile.

**.** According to an embodiment, said root edge 15 is an annular edge, tapered in axial direction, avoiding comprising flat surfaces perpendicular to the axial direction.

**.** According to an embodiment, the inner lip 4, the outer lip 6, and the annular root 14 have substantially the same axial dimension in the axial direction X-X.

**.** According to an embodiment, the number of said plurality of protuberances 9, 10 is between 10 and 100, preferably between 20 and 60, even more preferably 30.

**.** According to an embodiment, said gasket body is made of polymer material for gaskets, e.g., gasket rubber, preferably EPDM (Ethylene-Propylene Diene Monomer).

**.** The present invention also relates to a cylinder assembly 100 for a braking system.

**.** Said cylinder assembly 100 comprises a cylinder 101. Said cylinder 101 comprises a cylinder wall 103 internally delimiting a float housing 104. Said cylinder wall 103 delimits a pressure chamber fluidically connectable to a braking device. Said cylinder wall 103 delimits a primary gasket housing 105 and a secondary gasket housing 106. Said cylinder 101 defines a supply conduit 111 fluidically connectable to a reservoir and/or a fluid feeding valve, where said supply conduit 111 leads into a supply opening 112 on said cylinder wall 103 between said primary gasket housing 105 and said secondary gasket housing 106.

**.** Said cylinder assembly 100 comprises a float 102. The float 102 is slidingly accommodated in a sealing manner in the float housing 104 to pressurize a fluid in a pressure chamber 110 fluidically connectable to a braking device.

**.** Said cylinder assembly 100 comprises a primary gasket 1 according to any one of the previously described embodiments. The primary gasket 1 is accommodated in said primary gasket housing 105 with axial clearance between said first radial housing wall 108 and second said radial housing wall 109. When the primary gasket 1 abuts against said first radial housing wall 108, it forms a seal with said float 102 and said axial wall 107 of primary housing thus fluidically isolating the pressure chamber and the supply conduit 111. When the primary gasket 1 abuts against said second radial housing wall 109, it forms a seal with said float 102 avoiding the formation of a seal with the axial wall 107 of the primary housing to fluidically connect the supply conduit 111 and the pressure chamber 110 to increase the fluid pressure.

**.** Said cylinder assembly 100 comprises a secondary gasket 115 accommodated in the secondary gasket housing 106 to form a static and dynamic seal with said float and said cylinder wall 103.

**.** According to an embodiment, said secondary gasket 115 is a two-lip gasket.

**.** According to an embodiment, said cylinder assembly 100 is a brake master cylinder.

**.** According to an embodiment, said cylinder assembly 100 is an actuator for BBW (Brake By Wire) applications.

**.** According to an embodiment, said cylinder assembly 100 comprises an actuator motor 113.

**.** According to an embodiment, said cylinder assembly 100 comprises an elastic element 114 accommodated inside said cylinder 101, which constantly biases said float 102 in the opposite direction to a float advancement direction.

**.** According to an embodiment, the float 102 is axially movable between a resting configuration and at least one advanced configuration to pressurize a fluid, such as a brake fluid, in the pressure chamber.

**.** According to an embodiment, the primary gasket 1 is axially movable in the primary gasket housing between a fluid isolation configuration, in which the back portion 3 abuts against the first radial housing wall and the outer lip forms a seal with the axial wall and the inner lip forms a seal with the float 102, and a fluid communication configuration, in which the protuberances 10, 9 abut against the second radial housing wall and the outer lip is spaced apart from the axial wall and the inner lip forms a seal with the float 102.

**.** According to an embodiment, the float comprises a float body having a hollow portion delimited by a float wall, where the hollow portion is in fluid connection with the pressure chamber, where the float wall has a through opening. As long as said through opening is arranged between the primary gasket and the secondary gasket, the pressure chamber is in fluid communication with said supply conduit through said through opening. When said float is in said advanced configuration in which said through opening is axially advanced with respect to the primary gasket, the pressure chamber is fluidically isolated from the supply conduit by means of the primary gasket in the fluid isolation configuration, and the float pressurizes the fluid in the pressure chamber. When the fluid in the supply conduit exceeds the fluid pressure in the pressure chamber, the primary gasket switches to the fluid communication configuration, allowing the pressure in the pressure chamber to be increased.

### LIST OF REFERENCE SIGNS

- 1: primary gasket
- 2: annular body
- 3: back portion
- 4: inner lip
- 5: central lip
- 6: outer lip
- 7: central lip abutment portion
- 8: plurality of discharges
- 9: first neighboring protuberance
- 10: protuberance
- 11: inner lip end
- 12: outer lip end
- 13: back abutment surface
- 14: annular root
- 15: root edge
- 16: free edge portion
- 17: protuberance body
- 18: protuberance head

- 100: cylinder assembly
- 101: cylinder
- 102: float
- 103: cylinder wall
- 104: float housing
- 105: primary housing or primary gasket housing
- 106: secondary housing or secondary gasket housing
- 107: axial wall of primary housing
- 108: first radial wall of primary housing
- 109: second radial wall of primary housing
- 110: pressure chamber
- 111: supply conduit
- 112: supply opening
- 113: actuator motor
- 114: elastic element
- 115: secondary gasket
- X-X: axial direction
- R-R: radial direction

- L: circumferential discharge extension
- G: circumferential protuberance extension
- N: axial protuberance extension
- M: axial root extension

## Claims

1. A primary gasket (1) for a cylinder assembly (100), wherein said cylinder assembly (100) comprises a cylinder (101) and a float (102) slidingly housed in a float housing (104) delimited by a cylinder wall (103) of said cylinder (101) for pressurizing a fluid,
wherein the primary gasket (1) comprises an annular body (2), which extends circumferentially at least along a circumferential direction (C-C) about an axial direction (X-X), wherein said primary gasket (1) defines a radial direction (R-R) perpendicular to said axial direction (X-X) and said circumferential direction (C-C),
wherein said annular body (2) is configured to be accommodated in a primary gasket housing (105) defined in said cylinder wall (103), in which the primary gasket housing (105) is delimited radially by an axial housing wall (107) and axially by a first radial housing wall (108) and a second radial housing wall (109) connected in an undercut manner to said axial housing wall (107),
wherein said annular body (2) comprises an inner lip (4), a central lip (5), an outer lip (6), and a back portion (3),
wherein the back portion (3) comprises a back abutment surface (13) configured to abut against the first radial housing wall (108) of said primary gasket housing (105),
wherein the inner lip (4), central lip (5), and outer lip (6) extend axially from the back portion (3), on the side opposite the back abutment surface (13), radially spaced apart from one another,
wherein the inner lip (4) is configured to form a seal with said float (102),
wherein the outer lip (6) is configured to form a seal with said axial housing wall (107),
wherein the central lip (5) comprises an annular root (14), which extends axially between said back portion (3) and a root edge (15), wherein the central lip (5) comprises a plurality of protuberances (10, 9), wherein each protuberance (10, 9) protrudes axially from said root edge (15),
wherein said plurality of protuberances (10, 9) and said root edge (15) define a plurality of discharges (8),
wherein each discharge (8) is delimited by each protuberance (10) and one of its first neighboring protuberances (9) of said plurality of protuberances (10, 9) and by a free portion of the edge of said root edge 15, which extends between each protuberance (10) and its first neighboring protuberance (9),
wherein each protuberance (10, 9) extends circumferentially by one protuberance extension (G),
wherein each discharge (8) extends circumferentially by one discharge extension (L),
wherein a sum of each discharge extension (L) is greater than the sum of each protuberance extension (G),
wherein each protuberance (9, 10) comprises a protuberance body (17), which protrudes from said annular root (14), and a protuberance head (18) connected to said protuberance body (17), wherein said protuberance head is configured to abut against said second radial housing wall (109), preventing said root edge (15) from abutting against said second radial housing wall (109) allowing a passage of fluid through said plurality of discharges (8),
wherein said protuberance body (17) and/or each protuberance body (18) has a cylindrical and/or prismatic shape,
**characterised in that**
said protuberance head (18) and/or each protuberance head (18) has a rounded shape in the opposite direction to said annular root (15).

2. A primary gasket (1) according to the preceding claim, comprising at least one of the following features or a combination thereof:
wherein the sum of each discharge extension (L) is at least two times greater than the sum of each protuberance extension (G),
and/or wherein the sum of each discharge extension (L) is at least three times greater than the sum of each protuberance extension (G), and/or wherein said protuberances of said plurality of protuberances (10) are circumferentially equidistant from one another along said discharge extension (L),
and/or wherein each protuberance (10) and each first neighboring protuberance extend circumferentially with said protuberance extension (G).

3. A primary gasket (1) according to the preceding claim, comprising at least one of the following features or a combination thereof:
wherein said discharge extension (L) is equal to at least said protuberance extension (G),
and/or
wherein said discharge extension (L) is equal to at least twice said protuberance extension (G),
and/or
wherein said discharge extension (L) is comprised between at least three times said prominence extension (G) and at least five times said prominence extension (G).

4. A primary gasket (1) according to any one of the preceding claims, comprising at least one of the following features or a combination thereof:
wherein said annular root (14) has axially a root extension (M) between said back portion (3) and said root edge (15),
wherein each protuberance (9, 10) has axially a protuberance axial extension (N) between said root edge (15) and a protuberance end,
wherein the axial root extension (M) is comprised between two times the axial protuberance extension (N) and six times the axial protuberance extension (N).

5. A primary gasket (1) according to the preceding claim, comprising at least one of the following features or a combination thereof:
wherein said protuberance head (18) is made in one piece with said protuberance body (17);
and/or wherein said protuberance head (18) and/or each protuberance head (18) is tapered relative to said protuberance body (17).

6. A primary gasket (1) according to any one of the preceding claims from 4 to 5,
wherein said protuberance head (18) and/or each protuberance head (18) has a hemispherical or spherical cap shape in the direction opposite to said annular root, such that it abuts against a circular surface.

7. A primary gasket (1) according to any one of the preceding claims from 4 to 6,
wherein each discharge of said plurality of discharges (8) has a substantially U-shaped profile,
and/or wherein said root edge (15) is an annular edge.

8. A primary gasket (1) according to any one of the preceding claims, comprising at least one of the following features or a combination thereof:
wherein the inner lip (4), outer lip (6), and annular root (14) have substantially the same axial dimension in the axial direction (X-X), and/or
wherein there are from 10 to 90 of said plurality of protuberances (9, 10), preferably from 20 to 60 protuberances, even more preferably 30 protuberances.

9. A cylinder assembly (100) for a braking system, comprising
- a cylinder (101)
wherein said cylinder (101) comprises a cylinder wall (103), which internally delimits a floating housing (104),
wherein said cylinder wall (103) delimits a pressure chamber fluidically connectable to a braking device,
wherein said cylinder wall (103) delimits a primary gasket housing (105) and a secondary gasket housing (106), wherein the primary gasket housing (105) is radially delimited by an axial housing wall (107) and axially delimited by a first radial housing wall (108) and a second radial housing wall (109) connected to said axial housing wall (107),
wherein said cylinder (101) defines a supply conduit (111) fluidically connectable to a reservoir and/or fluid feeding valve, wherein said supply conduit (111) leads into a supply opening (112) on said cylinder wall (103) between said primary gasket housing (105) and said secondary gasket housing (106),
- a float (102),
wherein the float (102) is slidingly accommodated in a sealing manner in the float housing (104) to pressurize the fluid in a pressure chamber (110) fluidically connectable to a braking device,
- a primary gasket (1) according to any one of the preceding claims, wherein said primary gasket (1) is accommodated in said primary gasket housing (105) with axial clearance between said first radial housing wall (108) and said second radial housing wall (109), wherein said primary gasket (1) when it abuts against said first radial housing wall (108) is configured to form a seal with said float (102), said primary housing axial wall (107) fluidically isolating the pressure chamber and supply conduit (111), and wherein said primary gasket (1) when it abuts against said second radial wall (109) is configured to form a seal with said float (102) preventing the formation of a seal with said primary housing axial wall (107) to fluidically connect the supply conduit (111) and the pressure chamber (110) to increase the fluid pressure in the pressure chamber,
- a secondary gasket (115) accommodated in the secondary gasket housing (106) to form a static and dynamic seal with said floating (102) and said cylinder wall (103).

10. A cylinder assembly (100) according to the preceding claim wherein said cylinder assembly (100) is a master cylinder or is an actuator for BBW (Brake By Wire) applications.

## Patentansprüche

1. Primärdichtung (1) für eine Zylinderanordnung (100), wobei die Zylinderanordnung (100) einen Zylinder (101) und einen Schwimmer (102) umfasst, der gleitend in einem Schwimmergehäuse (104) aufgenommen ist, das durch eine Zylinderwand (103) des Zylinders (101) begrenzt ist, um ein Fluid unter Druck zu setzen,
wobei die Primärdichtung (1) einen ringförmigen Körper (2) umfasst, der sich umfänglich zumindest entlang einer Umfangsrichtung (C-C) um eine axiale Richtung (X-X) erstreckt, wobei die Primärdichtung (1) eine radiale Richtung (R-R) senkrecht zur axialen Richtung (X-X) und zur Umfangsrichtung (C-C) definiert,
wobei der ringförmige Körper (2) dazu ausgebildet ist, in einem Primärdichtungsgehäuse (105) aufgenommen zu werden, das in der Zylinderwand (103) definiert ist, wobei das Primärdichtungsgehäuse (105) radial durch eine axiale Gehäusewand (107) und axial durch eine erste radiale Gehäusewand (108) und eine zweite radiale Gehäusewand (109) begrenzt ist, die hinterschnitten mit der axialen Gehäusewand (107) verbunden sind,
wobei der ringförmige Körper (2) eine Innenlippe (4), eine Mittellippe (5), eine Außenlippe (6) und einen Rückenabschnitt (3) umfasst,
wobei der Rückenabschnitt (3) eine Rückenanlagefläche (13) umfasst, die dazu ausgebildet ist, an der ersten radialen Gehäusewand (108) des Primärdichtungsgehäuses (105) anzuliegen,
wobei sich die Innenlippe (4), die Mittellippe (5) und die Außenlippe (6) axial von dem Rückenabschnitt (3) auf der der Rückenanlagefläche (13) gegenüberliegenden Seite radial voneinander beabstandet erstrecken,
wobei die Innenlippe (4) dazu ausgebildet ist, eine Dichtung mit dem Schwimmer (102) zu bilden,
wobei die Außenlippe (6) dazu ausgebildet ist, eine Dichtung mit der axialen Gehäusewand (107) zu bilden,
wobei die Mittellippe (5) einen ringförmigen Fuß (14) umfasst, der sich axial zwischen dem Rückenabschnitt (3) und einer Fußkante (15) erstreckt, wobei die Mittellippe (5) eine Vielzahl von Vorsprüngen (10, 9) umfasst, wobei jeder Vorsprung (10, 9) axial von der Fußkante (15) vorsteht,
wobei die Vielzahl von Vorsprüngen (10, 9) und die Fußkante (15) eine Vielzahl von Auslässen (8) definieren,
wobei jeder Auslass (8) durch jeden Vorsprung (10) und einen seiner ersten benachbarten Vorsprünge (9) der Vielzahl von Vorsprüngen (10, 9) und durch einen freien Abschnitt der Kante der Fußkante (15) begrenzt ist, der sich zwischen jedem Vorsprung (10) und seinem ersten benachbarten Vorsprung (9) erstreckt,
wobei sich jeder Vorsprung (10, 9) umfänglich um eine Vorsprungserstreckung (G) erstreckt,
wobei sich jeder Auslass (8) umfänglich um eine Auslasserstreckung (L) erstreckt,
wobei eine Summe jeder Auslasserstreckung (L) größer ist als die Summe jeder Vorsprungserstreckung (G),
wobei jeder Vorsprung (9, 10) einen Vorsprungskörper (17), der von dem ringförmigen Fuß (14) vorsteht, und einen Vorsprungskopf (18) umfasst, der mit dem Vorsprungskörper (17) verbunden ist, wobei der Vorsprungskopf dazu ausgebildet ist, an der zweiten radialen Gehäusewand (109) anzuliegen, wodurch verhindert wird, dass die Fußkante (15) an der zweiten radialen Gehäusewand (109) anliegt, was einen Fluiddurchgang durch die Vielzahl von Auslässen (8) ermöglicht,
wobei der Vorsprungskörper (17) und/oder jeder Vorsprungskörper (18) eine zylindrische und/oder prismatische Form aufweist,
**dadurch gekennzeichnet, dass**
der Vorsprungskopf (18) und/oder jeder Vorsprungskopf (18) eine abgerundete Form in der dem ringförmigen Fuß (15) entgegengesetzten Richtung aufweist.

2. Primärdichtung (1) nach dem vorhergehenden Anspruch, umfassend mindestens eines der folgenden Merkmale oder eine Kombination davon:
wobei die Summe jeder Auslasserstreckung (L) mindestens zweimal größer ist als die Summe jeder Vorsprungserstreckung (G),
und/oder wobei die Summe jeder Auslasserstreckung (L) mindestens dreimal größer ist als die Summe jeder Vorsprungserstreckung (G),
und/oder wobei die Vorsprünge der Vielzahl von Vorsprüngen (10) in Umfangsrichtung entlang der Auslasserstreckung (L) gleichbeabstandet voneinander sind,
und/oder wobei sich jeder Vorsprung (10) und jeder erste benachbarte Vorsprung umfänglich mit der Vorsprungserstreckung (G) erstrecken.

3. Primärdichtung (1) nach dem vorhergehenden Anspruch, umfassend mindestens eines der folgenden Merkmale oder eine Kombination davon:
wobei die Auslasserstreckung (L) gleich mindestens der Vorsprungserstreckung (G) ist,
und/oder
wobei die Auslasserstreckung (L) gleich mindestens dem Zweifachen der Vorsprungserstreckung (G) ist,
und/oder
wobei die Auslasserstreckung (L) zwischen mindestens dem Dreifachen der Vorsprungserstreckung (G) und mindestens dem Fünffachen der Vorsprungserstreckung (G) liegt.

4. Primärdichtung (1) nach einem der vorhergehenden Ansprüche, umfassend mindestens eines der folgenden Merkmale oder eine Kombination davon:
wobei der ringförmige Fuß (14) axial eine Fußerstreckung (M) zwischen dem Rückenabschnitt (3) und der Fußkante (15) aufweist,
wobei jeder Vorsprung (9, 10) axial eine axiale Vorsprungserstreckung (N) zwischen der Fußkante (15) und einem Vorsprungsende aufweist,
wobei die axiale Fußerstreckung (M) zwischen dem Zweifachen der axialen Vorsprungserstreckung (N) und dem Sechsfachen der axialen Vorsprungserstreckung (N) liegt.

5. Primärdichtung (1) nach dem vorhergehenden Anspruch, umfassend mindestens eines der folgenden Merkmale oder eine Kombination davon:
wobei der Vorsprungskopf (18) einstückig mit dem Vorsprungskörper (17) ausgebildet ist;
und/oder wobei der Vorsprungskopf (18) und/oder jeder Vorsprungskopf (18) relativ zu dem Vorsprungskörper (17) verjüngt ist.

6. Primärdichtung (1) nach einem der vorhergehenden Ansprüche 4 bis 5,
wobei der Vorsprungskopf (18) und/oder jederVorsprungskopf (18) eine halbkugelförmige oder Kugelkalottenform in der dem ringförmigen Fuß entgegengesetzten Richtung aufweist, so dass er an einer kreisförmigen Oberfläche anliegt.

7. Primärdichtung (1) nach einem der vorhergehenden Ansprüche 4 bis 6,
wobei jeder Auslass der Vielzahl von Auslässen (8) ein im Wesentlichen U-förmiges Profil aufweist, und/oder wobei die Fußkante (15) eine ringförmige Kante ist.

8. Primärdichtung (1) nach einem der vorhergehendenAnsprüche, umfassend mindestens eines der folgenden Merkmale oder eine Kombination davon:
wobei die Innenlippe (4), die Außenlippe (6) und der ringförmige Fuß (14) im Wesentlichen die gleiche axiale Abmessung in der axialen Richtung (X-X) aufweisen,
und/oder
wobei von 10 bis 90 der Vielzahl von Vorsprüngen (9, 10) vorhanden sind, vorzugsweise von 20 bis 60 Vorsprünge, noch bevorzugter 30 Vorsprünge.

9. Zylinderanordnung (100) für ein Bremssystem, umfassend:
einen Zylinder (101)
wobei der Zylinder (101) eine Zylinderwand (103) umfasst, die innen ein Schwimmergehäuse (104) begrenzt,
wobei die Zylinderwand (103) eine Druckkammer (110) begrenzt, die fluidisch mit einer Bremsvorrichtung verbindbar ist,
wobei die Zylinderwand (103) ein Primärdichtungsgehäuse (105) und ein Sekundärdichtungsgehäuse (106) begrenzt, wobei das Primärdichtungsgehäuse (105) radial durch eine axiale Gehäusewand (107) und axial durch eine erste radiale Gehäusewand (108) und eine zweite radiale Gehäusewand (109) begrenzt ist, die mit der axialen Gehäusewand (107) verbunden sind,
wobei der Zylinder (101) eine Zufuhrleitung (111) definiert, die fluidisch mit einem Behälter und/oder einem Fluidzufuhrventil verbindbar ist, wobei die Zufuhrleitung (111) in eine Zufuhröffnung (112) an der Zylinderwand (103) zwischen dem Primärdichtungsgehäuse (105) und dem Sekundärdichtungsgehäuse (106) mündet,
einen Schwimmer (102),
wobei der Schwimmer (102) gleitend dichtend in dem Schwimmergehäuse (104) aufgenommen ist, um das Fluid in einer Druckkammer (110), die fluidisch mit einer Bremsvorrichtung verbindbar ist, unter Druck zu setzen,
∘ eine Primärdichtung (1) nach einem der vorhergehenden Ansprüche, wobei die Primärdichtung (1) in dem Primärdichtungsgehäuse (105) mit axialem Spiel zwischen der ersten radialen Gehäusewand (108) und der zweiten radialen Gehäusewand (109) aufgenommen ist,
wobei die Primärdichtung (1), wenn sie an der ersten radialen Gehäusewand (108) anliegt, dazu ausgebildet ist, eine Dichtung mit dem Schwimmer (102) zu bilden, wobei die primäre axiale Gehäusewand (107) die Druckkammer und die Zufuhrleitung (111) fluidisch isoliert, und wobei die Primärdichtung (1), wenn sie an der zweiten radialen Wand (109) anliegt, dazu ausgebildet ist, eine Dichtung mit dem Schwimmer (102) zu bilden, wobei die Bildung einer Dichtung mit der primären axialen Gehäusewand (107) verhindert wird, um die Zufuhrleitung (111) und die Druckkammer (110) fluidisch zu verbinden, um den Fluiddruck in der Druckkammer zu erhöhen,
eine Sekundärdichtung (115), die in dem Sekundärdichtungsgehäuse (106) aufgenommen ist, um eine statische und dynamische Dichtung mit dem Schwimmer (102) und der Zylinderwand (103) zu bilden.

10. Zylinderanordnung (100) nach dem vorhergehenden Anspruch, wobei die Zylinderanordnung (100) ein Hauptzylinder oder ein Aktuator für BBW- (Brake-By-Wire) Anwendungen ist.

## Revendications

1. Joint primaire (1) pour un ensemble cylindre (100), dans lequel ledit ensemble cylindre (100) comprend un cylindre (101) et un flotteur (102) logé coulissant dans un logement de flotteur (104) délimité par une paroi de cylindre (103) dudit cylindre (101) pour pressuriser un fluide,
dans lequel le joint primaire (1) comprend un corps annulaire (2), qui s'étend circonférentiellement au moins le long d'une direction circonférentielle (C-C) autour d'une direction axiale (X-X), dans lequel ledit joint primaire (1) définit une direction radiale (R-R) perpendiculaire à ladite direction axiale (X-X) et à ladite direction circonférentielle (C-C),
dans lequel ledit corps annulaire (2) est configuré pour être reçu dans un logement de joint primaire (105) défini dans ladite paroi de cylindre (103), dans lequel le logement de joint primaire (105) est délimité radialement par une paroi de logement axiale (107) et axialement par une première paroi de logement radiale (108) et une seconde paroi de logement radiale (109) reliées en contre-dépouille à ladite paroi de logement axiale (107),
dans lequel ledit corps annulaire (2) comprend une lèvre intérieure (4), une lèvre centrale (5), une lèvre extérieure (6), et une portion arrière (3),
dans lequel la portion arrière (3) comprend une surface de butée arrière (13) configurée pour venir en butée contre la première paroi de logement radiale (108) dudit logement de joint primaire (105),
dans lequel la lèvre intérieure (4), la lèvre centrale (5), et la lèvre extérieure (6) s'étendent axialement depuis la portion arrière (3), sur le côté opposé à la surface de butée arrière (13), espacées radialement les unes des autres,
dans lequel la lèvre intérieure (4) est configurée pour former une étanchéité avec ledit flotteur (102),
dans lequel la lèvre extérieure (6) est configurée pour former une étanchéité avec ladite paroi de logement axiale (107),
dans lequel la lèvre centrale (5) comprend une racine annulaire (14), qui s'étend axialement entre ladite portion arrière (3) et un bord de racine (15), dans lequel la lèvre centrale (5) comprend une pluralité de protubérances (10, 9), dans lequel chaque protubérance (10, 9) fait saillie axialement depuis ledit bord de racine (15),
dans lequel ladite pluralité de protubérances (10, 9) et ledit bord de racine (15) définissent une pluralité de décharges (8),
dans lequel chaque décharge (8) est délimitée par chaque protubérance (10) et l'une de ses premières protubérances voisines (9) de ladite pluralité de protubérances (10, 9) et par une portion libre du bord dudit bord de racine (15), qui s'étend entre chaque protubérance (10) et sa première protubérance voisine (9),
dans lequel chaque protubérance (10, 9) s'étend circonférentiellement sur une étendue de protubérance (G),
dans lequel chaque décharge (8) s'étend circonférentiellement sur une étendue de décharge (L),
dans lequel une somme de chaque étendue de décharge (L) est supérieure à la somme de chaque étendue de protubérance (G),
dans lequel chaque protubérance (9, 10) comprend un corps de protubérance (17), qui fait saillie depuis ladite racine annulaire (14) et une tête de protubérance (18) reliée audit corps de protubérance (17), dans lequel ladite tête de protubérance est configurée pour venir en butée contre ladite seconde paroi de logement radiale (109), empêchant ledit bord de racine (15) de venir en butée contre ladite seconde paroi de logement radiale (109) permettant un passage de fluide à travers ladite pluralité de décharges (8),
dans lequel ledit corps de protubérance (17) et/ou chaque corps de protubérance (18) a une forme cylindrique et/ou prismatique,
**caractérisé en ce que**
ladite tête de protubérance (18) et/ou chaque tête de protubérance (18) a une forme arrondie dans la direction opposée à ladite racine annulaire (15).

2. Joint primaire (1) selon la revendication précédente, comprenant au moins l'une des caractéristiques suivantes ou une combinaison de celles-ci :
dans lequel la somme de chaque étendue de décharge (L) est au moins deux fois supérieure à la somme de chaque étendue de protubérance (G),
et/ou dans lequel la somme de chaque étendue de décharge (L) est au moins trois fois supérieure à la somme de chaque étendue de protubérance (G),
et/ou dans lequel lesdites protubérances de ladite pluralité de protubérances (10) sont circonférentiellement équidistantes les unes des autres le long de ladite étendue de décharge (L),
et/ou dans lequel chaque protubérance (10) et chaque première protubérance voisine s'étendent circonférentiellement avec ladite étendue de protubérance (G).

3. Joint primaire (1) selon la revendication précédente, comprenant au moins l'une des caractéristiques suivantes ou une combinaison de celles-ci :
dans lequel ladite étendue de décharge (L) est égale à au moins ladite étendue de proéminence (G), et/ou
dans lequel ladite étendue de décharge (L) est égale à au moins deux fois ladite étendue de proéminence (G),
et/ou
dans lequel ladite étendue de décharge (L) est comprise entre au moins trois fois ladite étendue de proéminence (G) et au moins cinq fois ladite étendue de proéminence (G).

4. Joint primaire (1) selon l'une quelconque des revendications précédentes, comprenant au moins l'une des caractéristiques suivantes ou une combinaison de celles-ci :
dans lequel ladite racine annulaire (14) a axialement une étendue de racine (M) entre ladite portion arrière (3) et ledit bord de racine (15),
dans lequel chaque protubérance (9, 10) a axialement une étendue axiale de protubérance (N) entre ledit bord de racine (15) et une extrémité de protubérance,
dans lequel l'étendue de racine axiale (M) est comprise entre deux fois l'étendue axiale de protubérance (N) et six fois l'étendue axiale de protubérance (N).

5. Joint primaire (1) selon la revendication précédente, comprenant au moins l'une des caractéristiques suivantes ou une combinaison de celles-ci :
dans lequel ladite tête de protubérance (18) est réalisée d'une seule pièce avec ledit corps de protubérance (17) ;
et/ou dans lequel ladite tête de protubérance (18) et/ou chaque tête de protubérance (18) est effilée par rapport audit corps de protubérance (17).

6. Joint primaire (1) selon l'une quelconque des revendications précédentes 4 à 5,
dans lequel ladite tête de protubérance (18) et/ou chaque tête de protubérance (18) a une forme hémisphérique ou de calotte sphérique dans la direction opposée à ladite racine annulaire, de telle sorte qu'elle vient en butée contre une surface circulaire.

7. Joint primaire (1) selon l'une quelconque des revendications précédentes 4 à 6,
dans lequel chaque décharge de ladite pluralité de décharges (8) a un profil sensiblement en forme de U,
et/ou dans lequel ledit bord de racine (15) est un bord annulaire.

8. Joint primaire (1) selon l'une quelconque des revendications précédentes, comprenant au moins l'une des caractéristiques suivantes ou une combinaison de celles-ci :
dans lequel la lèvre intérieure (4), la lèvre extérieure (6), et la racine annulaire (14) ont sensiblement la même dimension axiale dans la direction axiale (X-X),
et/ou
dans lequel il y a de 10 à 90 de ladite pluralité de protubérances (9, 10), de préférence de 20 à 60 protubérances, encore plus préférablement 30 protubérances.

9. Ensemble cylindre (100) pour un système de freinage, comprenant :
un cylindre (101)
dans lequel ledit cylindre (101) comprend une paroi de cylindre (103), qui délimite intérieurement un logement de flotteur (104),
dans lequel ladite paroi de cylindre (103) délimite une chambre de pression (110) pouvant être connectée fluidiquement à un dispositif de freinage,
dans lequel ladite paroi de cylindre (103) délimite un logement de joint primaire (105) et un logement de joint secondaire (106), dans lequel le logement de joint primaire (105) est délimité radialement par une paroi de logement axiale (107) et délimité axialement par une première paroi de logement radiale (108) et une seconde paroi de logement radiale (109) reliées à ladite paroi de logement axiale (107),
dans lequel ledit cylindre (101) définit un conduit d'alimentation (111) pouvant être connecté fluidiquement à un réservoir et/ou une soupape d'alimentation en fluide, dans lequel ledit conduit d'alimentation (111) débouche dans une ouverture d'alimentation (112) sur ladite paroi de cylindre (103) entre ledit logement de joint primaire (105) et ledit logement de joint secondaire (106),
un flotteur (102),
dans lequel le flotteur (102) est logé coulissant de manière étanche dans le logement de flotteur (104) pour pressuriser le fluide dans une chambre de pression (110) pouvant être connectée fluidiquement à un dispositif de freinage,
∘ un joint primaire (1) selon l'une quelconque des revendications précédentes, dans lequel ledit joint primaire (1) est logé dans ledit logement de joint primaire (105) avec un jeu axial entre ladite première paroi de logement radiale (108) et ladite seconde paroi de logement radiale (109),
dans lequel ledit joint primaire (1) lorsqu'il vient en butée contre ladite première paroi de logement radiale (108) est configuré pour former une étanchéité avec ledit flotteur (102), ladite paroi axiale de logement primaire (107) isolant fluidiquement la chambre de pression et le conduit d'alimentation (111), et dans lequel ledit joint primaire (1) lorsqu'il vient en butée contre ladite seconde paroi radiale (109) est configuré pour former une étanchéité avec ledit flotteur (102) empêchant la formation d'une étanchéité avec ladite paroi axiale de logement primaire (107) pour connecter fluidiquement le conduit d'alimentation (111) et la chambre de pression (110) afin d'augmenter la pression de fluide dans la chambre de pression,
un joint secondaire (115) logé dans le logement de joint secondaire (106) pour former une étanchéité statique et dynamique avec ledit flotteur (102) et ladite paroi de cylindre (103).

10. Ensemble cylindre (100) selon la revendication précédente, dans lequel ledit ensemble cylindre (100) est un maître-cylindre ou est un actionneur pour des applications BBW (Brake By Wire).
